# EUROPEAN PATENT SPECIFICATION

(11) **EP 2 904 862 B1**
(45) Date of publication and mention of the grant of the patent: **01.01.2020**
(21) Application number: 12778667.1
(22) Date of filing: 08.10.2012
(51) Int. Cl.: H04W 72/04, H04L 1/18

(54) **FREQUENCY RESOURCE ALLOCATION FOR SEMI-PERSISTENT SCHEDULING**
FREQUENZRESSOURCENZUWEISUNG FÜR SEMIPERSISTENTE PLANUNG
AFFECTATION DE RESSOURCES DE FRÉQUENCE POUR UN ORDONNANCEMENT SEMI-PERMANENT

(43) Date of publication of application: 12.08.2015
(73) Proprietor: Telefonaktiebolaget LM Ericsson (publ), 164 83 Stockholm (SE)
(72) Inventor: WANG, Hongwei, SE-171 60 Solna (SE); SUN, Ying, SE-172 72 Sundbyberg (SE)
(74) Representative: Ericsson
(86) International application number: PCT/EP2012/069817
(87) International publication number: WO 2014/056518

(56) References cited:
- US-A1- 2008 253 326
- US-A1- 2009 103 440
- US-A1- 2010 128 687
- ERICSSON: "Scheduling for maximizing VoIP capacity", 3GPP DRAFT; R2-070055, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20070112, 12 January 2007 (2007-01-12), XP050133172, [retrieved on 2007-01-12]
- CATT ET AL: "Collision Avoidance While Using Synchronous HARQ", 3GPP DRAFT; R2-070740, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. St. Louis, USA; 20070209, 9 February 2007 (2007-02-09), XP050133772, [retrieved on 2007-02-09]

## Description

### TECHNICAL FIELD

The disclosure relates to frequency resource allocation in semi-persistent scheduling, and more specifically to a method and a radio base station of a wireless communication network, for allocating frequency resources for multiple wireless devices in a cell, wherein semi-persistent scheduling and automatic retransmissions are applied for the wireless devices.

### BACKGROUND

3GPP Long Term Evolution (LTE) is the fourth-generation mobile communication technologies standard developed within the 3^{rd} Generation Partnership Project (3GPP) to improve the Universal Mobile Telecommunication System (UMTS) standard to cope with future requirements in terms of improved services such as higher data rates, improved efficiency, and lowered costs. The Universal Terrestrial Radio Access Network (UTRAN) is the radio access network of a UMTS and Evolved UTRAN (E-UTRAN) is the radio access network of an LTE system. In an E-UTRAN, a wireless device such as a User Equipment (UE) is wirelessly connected to a Radio Base Station (RBS) commonly referred to as an evolved NodeB (eNodeB) in LTE. An RBS is a general term for a radio network node capable of transmitting radio signals to a UE and receiving signals transmitted by a UE. The eNodeB is a logical node in LTE and the RBS is a typical example of a physical implementation of an eNodeB.

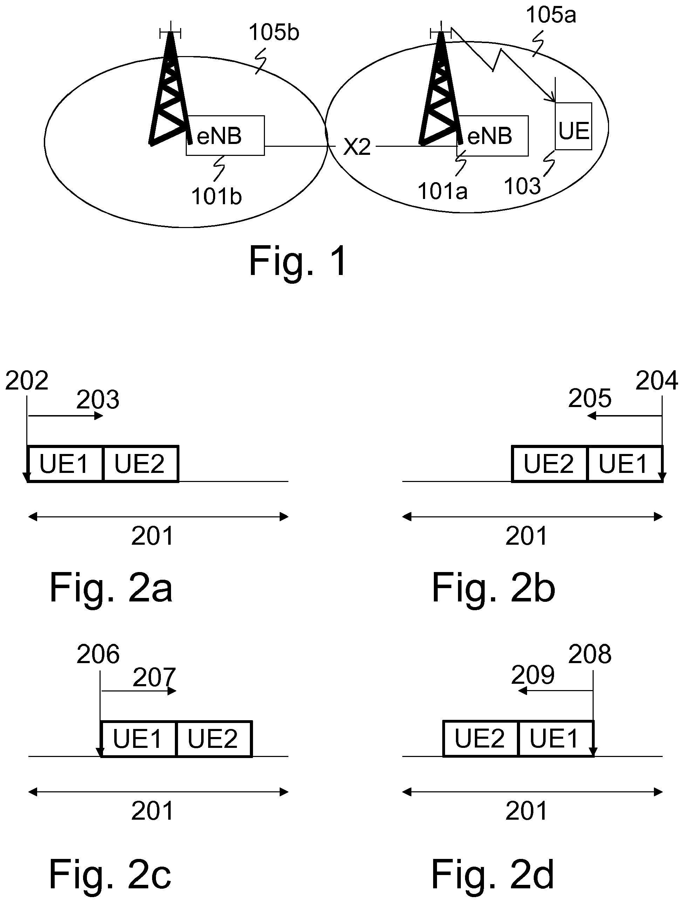

**Figure 1** illustrates a radio access network in an LTE system. An eNodeB 101 a serves a UE 103 located within the eNodeB's geographical area of service also called a cell 105a. The eNodeB 101a is directly connected to the core network (not illustrated). The eNodeB 101a is also connected via an X2 interface to a neighboring eNodeB 101b serving another cell 105b. Although the eNodeBs of this example network serves one cell each, an eNodeB may serve more than one cell.

### Semi-Persistent Scheduling (SPS)

In a traditional dynamic scheduling strategy in LTE, the scheduling decision is made every Time to Trigger Interval (TTI) which is 1ms in LTE. Furthermore, the detailed scheduling grant, comprising scheduled resources and modulation coding scheme, is transmitted to the UE over a Physical Downlink Control Channel (PDCCH) every time the UE is scheduled. In order to decrease the load on the PDCCH, SPS has been specified in 3GPP. The idea with SPS is to produce persistent scheduling grants and assignments for the initial transmission periodically, which will reduce the need for PDCCH signaling. SPS is mainly used for the scheduling of UEs using Voice over IP (VoIP) type of traffic, where the packets are generated periodically with almost predictable packet sizes. In order to adapt to the characteristics of VoIP traffic, the SPS scheduling decision will be valid for a certain time. One SPS scheduling grant will thus result into periodic UE transmissions during this time without any further signaling via PDCCH. For example, once the uplink SPS scheduling is activated for a certain UE, it will keep sending data in accordance with the SPS scheduling grant periodically, using the same frequency resources and Modulation Coding Schemes (MCS) in each SPS period. An SPS scheduling grant thus comprises scheduled frequency resources and MCS to use during an SPS period. As long as the SPS scheduling grant is active, the SPS periods' scheduled frequency resources and MCS will be repeated. Therefore, all uplink transmissions will only need this single SPS scheduling grant sent over the PDCCH in total, which will reduce the PDCCH resource usage for scheduling grants dramatically.

### Hybrid Automatic Repeat Request (HARQ) Retransmission

Synchronized HARQ retransmissions are used for uplink transmissions in LTE. This means that a HARQ retransmission can only take place after each HARQ retransmission Round Trip Time (RTT). The HARQ retransmission RTT value determines the time difference between a transmission and a HARQ retransmission. In general, there are two types of HARQ retransmissions: non-adaptive retransmissions and adaptive retransmissions. If the same frequency resources as the frequency resources of the initial transmission are available at the HARQ retransmission occasion, i.e. after the HARQ RTT value, the UE may use the same frequency resources for non-adaptive retransmission. For such a non-adaptive retransmission, no PDCCH signaling is required. However, if the frequency resources are allocated by other UEs, the retransmission has to be allocated in different frequency resources, or if there are not enough resources such as PDCCH resources or frequency resources left, the retransmission has to be delayed until the next HARQ RTT. For such an adaptive retransmission, PDCCH signaling is required to inform the UE about the new scheduling decision, i.e. mainly about the frequency resources to use for this adaptive retransmission.

### HARQ Retransmission Collision

As mentioned above, one of the main benefits of using SPS is to reduce the control signaling load on PDCCH, by using semi-persistent transmission grants or assignments for the UE uplink transmissions. In case of an HARQ retransmission in uplink, an adaptive retransmission will be triggered in the case of a collision in the frequency domain, which requires an uplink grant over PDCCH. If there is no collision of resources in the frequency domain, a non-adaptive HARQ retransmission will be initialized without any consumption of PDCCH resources.

A resource allocation for SPS may result in a collision between the potential retransmission occasions of one SPS UE with the persistent initial SPS transmission of another UE in the same cell. As synchronous HARQ retransmissions are used together with a persistent resource allocation for the initial transmission, the collision will happen continuously. By adopting an adaptive retransmission scheme, the collision problem can be partially mitigated (Ericsson: "Scheduling for maximizing VolP capacity", R2-070055) However, a higher PDCCH resource utilization is required with an adaptive retransmission, which will eat up the gain of SPS with regards to PDCCH resource savings.

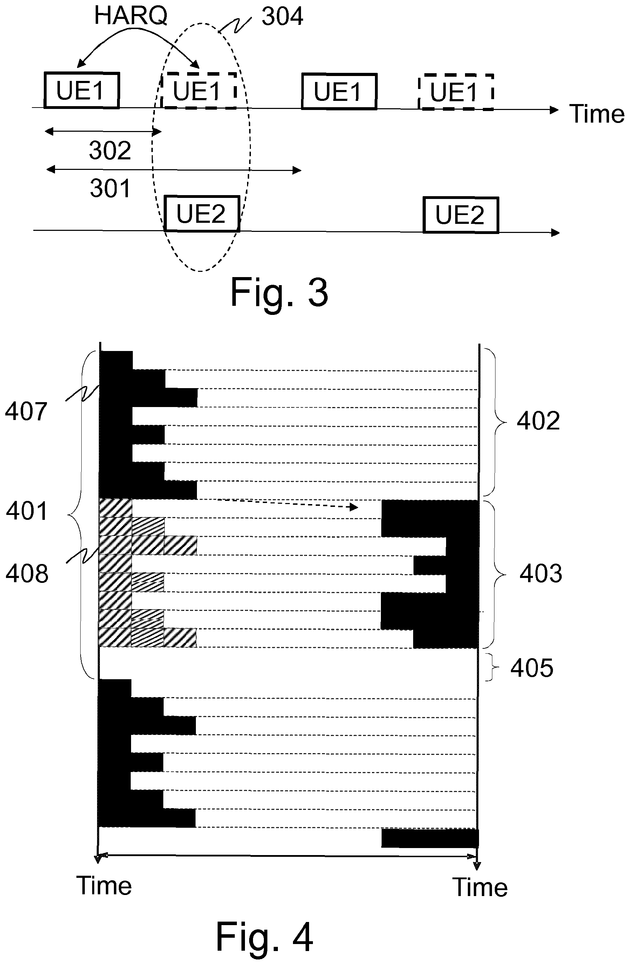

**Figure 3** illustrates an example scenario used to describe a problem that may occur when using SPS and HARQ retransmissions. In this example scenario two UEs, UE1 and UE2, are both uplink SPS users in the same cell with the same SPS period 301. The semi-persistent resource allocations for the initial transmission are indicated by squares with unbroken lines over time, and the potential non-adaptive HARQ retransmissions of the UE1 transmissions are indicated by squares with broken lines. When the time difference between resource allocations in a semi-persistent grant for UE1 and for UE2 is the same as the HARQ RTT value 302, all the non-adaptive HARQ retransmission occasions of the UE1 will collide with the semi-persistent transmission of the UE2, 304. Therefore, all first HARQ retransmissions of UE1 will be adaptive retransmissions, as non-adaptive retransmissions are not possible due to the collisions. Consequently, all those adaptive retransmissions may consume PDCCH resources and may counteract the gain from SPS. Furthermore, considering the use of synchronized HARQ in uplink, if the PDCCH resource is limited in the first TTI, it may be required to wait another HARQ RTT before trying to make a retransmission again. This may significantly increase the delay and may result in quality degradation for VoIP UEs which are delay sensitive. Since the SPS will probably result in more retransmissions than the traditional dynamic scheduling due to a static scheduling, the impact of a collision of retransmissions will be larger. Other prior art US2010128687 avoids capacity loss in MU-MIMO uplink VolP networks by scheduling transmissions and retransmissions such that one is scheduled along a pre-defined resource and the other is scheduled along a changing resource.

### SUMMARY

It is therefore an object to address some of the problems outlined above, and to provide a solution making it possible to reduce the risk for collisions for non-adaptive HARQ retransmissions of SPS UE transmissions, and thus to avoid adaptive HARQ retransmissions. This object and others are achieved by the method and the RBSs according to the independent claims, and by the embodiments according to the dependent claims.

In accordance with a first aspect of the invention, a method for allocating frequency resources for at least two wireless devices in a cell of a wireless communication network is provided. SPS transmissions and automatic retransmissions are applied for the at least two wireless devices. A time difference between an SPS transmission and an automatic retransmission related to the SPS transmission is determined by a round trip time value. The method is performed in an RBS serving the cell. The method comprises determining at least two different sets of frequency resources for the SPS transmissions of the at least two wireless devices. The method also comprises allocating frequency resources for the SPS transmissions of the at least two wireless devices within an SPS period, such that the allocated frequency resources change between two of the at least two different sets every round trip time value.

In accordance with a second aspect of the invention, an RBS configured to serve a cell of a wireless communication network is provided. The RBS is also configured to allocate frequency resources for at least two wireless devices in the cell, and to apply SPS transmissions and automatic retransmissions for the at least two wireless devices. A time difference between an SPS transmission and an automatic retransmission related to the SPS transmission is determined by a round trip time value. The RBS comprises a processing unit configured to determine at least two different sets of frequency resources for the SPS transmissions of the at least two wireless devices. The processing unit is also configured to allocate frequency resources for the SPS transmissions of the at least two wireless devices within an SPS period, such that the allocated frequency resources change between two of the at least two different sets every round trip time value.

An advantage of embodiments of the invention is that adaptive HARQ retransmissions are avoided for an SPS UE by resource allocating such that synchronized collision with an initial transmission of another SPS UE is avoided. This will minimize the consumption of the PDCCH resources when using SPS in uplink.

A further advantage of embodiments of the invention is that it will reduce the potential delay for HARQ retransmissions which is due to limited PDCCH resources.

Other objects, advantages and features of embodiments will be explained in the following detailed description when considered in conjunction with the accompanying drawings and claims.

### BRIEF DESCRIPTION OF THE DRAWINGS

**Figure 1** is a schematic illustration of a radio access network in LTE.
**Figures 2a****-d** is a schematic illustration of four sequential resource allocation examples.
**Figure 3** is a schematic illustration of a frequency resource allocation situation when potential HARQ retransmissions of one UE collide with semi-persistent scheduling of another UE.
**Figure 4** is a schematic illustration of a frequency resource allocation according to embodiments of the invention.
**Figure 5** is a flowchart illustrating the method in the RBS according to embodiments.
**Figure 6** is a block diagram schematically illustrating the RBS according to embodiments.

### DETAILED DESCRIPTION

In the following, different aspects will be described in more detail with references to certain embodiments of the invention and to accompanying drawings. For purposes of explanation and not limitation, specific details are set forth, such as particular scenarios and techniques, in order to provide a thorough understanding of the different embodiments. However, other embodiments that depart from these specific details may also exist.

Moreover, those skilled in the art will appreciate that the functions and means explained herein below may be implemented using software functioning in conjunction with a programmed microprocessor or general purpose computer, and/or using an application specific integrated circuit (ASIC). It will also be appreciated that while embodiments of the invention are primarily described in the form of methods and nodes, they may also be embodied in a computer program product as well as in a system comprising a computer processor and a memory coupled to the processor, wherein the memory is encoded with one or more programs that may perform the functions disclosed herein.

Embodiments are described in a non-limiting general context in relation to an example scenario with uplink scheduling of UEs by an eNodeB in E-UTRAN, where SPS transmissions and HARQ retransmissions are applied to the UEs. However, it should be noted that the embodiments may be applied to any radio access network technology supporting SPS and automatic retransmissions. Furthermore, the embodiments may be applied to other types of automatic retransmissions than HARQ retransmissions. In the following, UEs for which SPS is applied and which thus perform SPS transmissions are referred to as SPS UEs.

The problem of adaptive HARQ retransmissions for SPS UEs which counteracts the PDCCH resource gain from SPS is addressed by a solution where a frequency resource allocation algorithm is used to avoid synchronized collisions between the retransmissions of one SPS UE with the initial retransmission of another SPS UE in the same cell. The frequency resource allocation strategy is to use a hopping concept for the allocated resources within a cell.

The object of embodiments of the invention is to manage the frequency resources allocated for SPS UEs so as to avoid synchronization between retransmissions and persistent transmissions among the SPS UEs in a same cell. In order to achieve this object, the scheduler, which is the unit in the eNodeB scheduling UEs and allocating frequency resources to the UEs, need to follow some rules when selecting frequency resources allocated to the SPS UEs.

In the below described example embodiment, it is assumed that a sequential frequency resource allocation is used for SPS UEs. Sequential resource allocation, schematically illustrated in **Figures 2a****-d,** is one resource allocation strategy for SPS UEs. In **Figures 2a****-d,** different frequency resource allocations for SPS transmissions of two UEs, UE1 and UE2, over the available frequency spectrum 201 are illustrated. In **Figure 2a** the starting point 202 of the frequency allocation is the lowest frequency of the available spectrum 201, and resources are allocated sequentially for UE1 and UE2 in the direction 203 towards higher frequencies. In **Figure 2b** the starting point 204 of the frequency allocation is the highest frequency of the available spectrum 201, and resources are allocated sequentially for UE1 and UE2 in the direction 205 towards lower frequencies. In **Figure 2c** the starting point 206 of the frequency allocation is a frequency in the middle of the available spectrum 201, and resources are allocated sequentially for UE1 and UE2 in the direction 207 towards higher frequencies. In **Figure 2d** the starting point 208 of the frequency allocation is a frequency in the middle of the available spectrum 201, and resources are allocated sequentially for UE1 and UE2 in the direction 209 towards lower frequencies.

Sequential frequency resource allocation thus means that the allocated set of frequency resources will cover frequencies starting from a starting point in the available frequency spectrum and continuing sequentially in a direction towards higher or lower frequencies with regards to the starting point. Therefore, a set of sequential frequency resources for SPS transmission of the two UEs, UE1 and UE2, may be determined by a starting point and a direction towards higher or lower frequencies.

Sequential resource allocation reduces the segmentation in the frequency domain, which could increase the resource utilization and eventually the cell throughput. Sequential resource allocation is also advantageous when Single Carrier - Orthogonal Frequency Division Multiplexing (SC-OFDM) is used for LTE uplink transmissions. In SC-OFDM the UEs need adjacent frequency resources for their uplink transmissions.

**Figure 4** will be used to describe exemplary embodiments of this invention. In the example of **Figure 4****,** it is assumed that the SPS period 401 is 20 ms for all the SPS UEs in the cell. A 20 ms SPS period is a value that matches the packet inter-arrival time for VoIP UEs when the UEs are in VoIP TALK Mode, i.e. when the UE is used for a phone conversation. Furthermore, it is assumed that the HARQ RTT value is 8 ms which is a conventional value, unless TTI bundling is enabled between UE and eNodeB. However, embodiments of the present invention are not limited to these values of the SPS period and the HARQ RTT, which are only examples used to illustrate embodiments of the invention.

In one embodiment of the invention, the following rules may be applied by the scheduler when allocating frequency resources for SPS UE transmissions:
1. The starting point for the allocated set of sequential frequency resources for SPS UEs has to be different after every HARQ RTT value. In **Figure 4** schematically illustrating one example of how frequency resources may be allocated to SPS UEs over time, the initial starting point for frequency resources, 407, allocated in the first 8 ms, 402, of one SPS period, 401, is the lowest possible frequency, and the direction is thus towards higher frequencies. According to the rule, the starting point of the allocated frequency resources is changed after the first 8 ms, 402, and the allocated frequency resources, 407, during the next HARQ RTT value or 8 ms, 403, has a starting point which is the highest possible frequency of the available spectrum, and a direction towards lower frequencies. In this way, the persistent transmission may avoid the collision with the potential retransmission, indicated by striped squares in 408, of UEs allocated in the previous 8 ms, 402, as the set of frequency resources used for the persistent transmission during the second period of 8 ms, 403, is different from the set of frequency resources used during the first 8 ms period, 402.
2. Some of the resources in time domain will not be allocated to any SPS UEs. The number of unutilized resources should be calculated based on the following equation: SPS Period - EVEN[SPS Period/HARQ RTT] * HARQ RTT. The EVEN function gives the first even integer that is smaller than the number within brackets, meaning e.g. that EVEN[4.6]=4, and EVEN[5.3]=4. In the example of **Figure 4****,** the number of unutilized resources is 20-2×8=4ms, 405. Therefore, the last 4 ms, 405, of the SPS period, 401, until the start of a new SPS period, will not be allocated for any SPS transmission within the cell.

It should be noted that the rules are applied for the SPS UEs only. Therefore the unutilized resources according to rule 2 above, may be used by dynamic non-SPS UEs within the same cell. Moreover, if the SPS period is less than the HARQ RTT value, no special resource arrangement is needed, and none of the rules above applies. SPS UEs with an SPS period smaller than the HARQ RTT value could thus also use the unutilized resources of other SPS UEs.

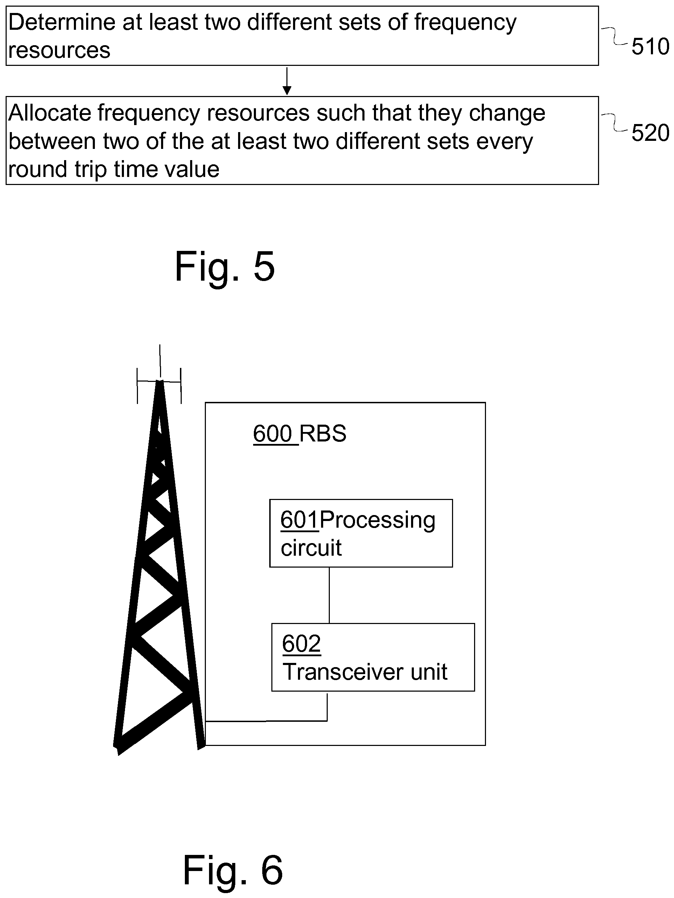

**Figure 5** is a flowchart illustrating an embodiment of a method for allocating frequency resources for at least two wireless devices in a cell of a wireless communication network. SPS transmissions and automatic retransmissions are applied for the at least two wireless devices. The automatic retransmission may be a HARQ retransmission. A time difference between an SPS transmission and an automatic retransmission related to the SPS transmission is determined by a round trip time value. The method is performed in a RBS serving the cell. The RBS may in one embodiment be an eNodeB of an E-UTRAN. The method comprises:
- 510: Determining at least two different sets of frequency resources for the SPS transmissions of the at least two wireless devices. Each of the at least two different sets of frequency resources may be determined by a starting point in the available frequency spectrum and a direction towards higher or lower frequencies, i.e. for example according to any of the examples given in **Figure 2a****-d.** In one embodiment, the at least two different sets of frequency resources are determined to have different starting points, and/or different directions. A first set could e.g. be determined according to **Figure 2a** and a second set according to **Figure 2c****,** the two sets thus having different starting points but a same direction. A first of the at least two different sets of frequency resources may be determined to have the starting point at the lowest frequency of the available frequency spectrum and a second of the at least two sets of frequency resources may be determined to have the starting point at the highest frequency of the available frequency spectrum, as in the examples of **Figure 2a** and **2b** respectively, and as in the example embodiment described above with reference to **Figure 4****.** This embodiment has the advantage of not segmenting the frequency spectrum.
- 520: Allocating frequency resources for the SPS transmissions of the at least two wireless devices within an SPS period, such that the allocated frequency resources change between two of the at least two different sets every round trip time value. In one embodiment, only two different sets of frequency resources are determined, and the frequency resources are allocated such that the frequency resources change an odd amount of times between the two different sets. In the example embodiment described above with reference to **Figure 4****,** the frequency resources change once between the first and the second set of frequency resources, where the first set has a starting point which is the lowest possible frequency, and the second set has a starting point which is the highest possible frequency. In another example embodiment, if the SPS period is 20 ms and the HARQ RTT value is 5 ms, it would be possible to change three times between the two set of frequency resources. During the first 5 ms, the set of frequency resources with a starting point which is the lowest possible frequency would be used. The first change comes after 5 ms corresponding to the HARQ RTT value, and the resource allocation is changed to the second set of frequency resources with a starting point which is the highest possible frequency. After another HARQ RTT value, i.e. after 10 ms, the allocation is changed a second time so that a starting point at the lowest available frequency is used, and after still another HARQ RTT value, i.e. after 15 ms, the allocation is change a third and last time back to the starting point at the highest possible frequency. In this example embodiment, there will be no unused resources during the SPS period, as SPS Period - EVEN[SPS Period/HARQ RTT] × HARQ RTT= 20-4×5=0.

An embodiment of an RBS 600 is schematically illustrated in the block diagram in **Figure 6****.** The RBS 600 is configured to serve a cell of a wireless communication network, to allocate frequency resources for at least two wireless devices in the cell, and to apply SPS transmissions and automatic retransmissions for the at least two wireless devices. The RBS may in one embodiment be an eNodeB configured to serve the cell in an E-UTRAN. The automatic retransmission may be a HARQ retransmission. A time difference between an SPS transmission and an automatic retransmission related to the SPS transmission is determined by a round trip time value. The RBS comprises a processing unit 601 configured to determine at least two different sets of frequency resources for the SPS transmissions of the at least two wireless devices. Each of the at least two different sets of frequency resources may be determined by a starting point in the available frequency spectrum and a direction towards higher or lower frequencies. The at least two different sets of frequency resources may be determined to have different starting points, and/or different directions. In one embodiment, a first of the at least two different sets of frequency resources is determined to have the starting point at the lowest frequency of the available frequency spectrum and a second of the at least two sets of frequency resources is determined to have the starting point at the highest frequency of the available frequency spectrum. The processing unit 601 is also configured to allocate frequency resources for the SPS transmissions of the at least two wireless devices within an SPS period, such that the allocated frequency resources change between two of the at least two different sets every round trip time value. In one embodiment of the invention, the processing unit is configured to determine only two different sets of frequency resources and to allocate frequency resources such that the allocated frequency resources change an odd amount of times between the two different sets.

The RBS 600 may also comprise a transceiver unit 602 configured to allow transmission to and reception from a UE in a cell served by the RBS 600. The transceiver unit may be connected to one or more antennas via one or more antenna ports in the RBS 600.

In an alternative way to describe the embodiments in **Figure 6****,** the RBS 600 comprises a Central Processing Unit (CPU) which may be a single unit or a plurality of units. Furthermore, the RBS 600 comprises at least one computer program product (CPP) in the form of a non-volatile memory, e.g. an EEPROM (Electrically Erasable Programmable Read-Only Memory), a flash memory or a disk drive. The CPP comprises a computer program, which in turn comprises code means which when run on the RBS causes the CPU to perform steps of the procedure described earlier in conjunction with **Figure 5****.** In other words, when said code means are run on the CPU, they correspond to the processing circuit 601 in the RBS 600 of **Figure 6****.**

The above mentioned and described embodiments are only given as examples and should not be limiting. Other solutions, uses, objectives, and functions within the scope of the accompanying patent claims may be possible.

## Claims

1. A method for allocating frequency resources for at least two wireless devices in a cell of a wireless communication network, wherein semi-persistent scheduling, SPS, transmissions and automatic retransmissions are applied for the at least two wireless devices, and wherein a time difference between an SPS transmission and a first automatic retransmission related to the SPS transmission is determined by a round trip time value, the method being performed in a radio base station (600) serving the cell, and the method comprising:
- determining (510) at least two different sets of frequency resources for the SPS transmissions of the at least two wireless devices, and
- allocating (520) frequency resources for the SPS transmissions of the at least two wireless devices within an SPS period, such that the allocated frequency resources change between two of the at least two different sets every round trip time value.

2. The method according to claim 1, wherein each of the at least two different sets of frequency resources is determined by a starting point in the available frequency spectrum and a direction towards higher or lower frequencies.

3. The method according to claim 2, wherein the at least two different sets of frequency resources are determined to have different starting points, and/or different directions.

4. The method according to any of claims 2-3, wherein a first of the at least two different sets of frequency resources is determined to have the starting point at a lowest frequency of the available frequency spectrum and a second of the at least two sets of frequency resources is determined to have the starting point at a highest frequency of the available frequency spectrum.

5. The method according to any of the preceding claims, wherein only two different sets of frequency resources are determined (510) and wherein the frequency resources are allocated (520) such that the frequency resources change an odd amount of times between the two different sets.

6. The method according to any of the preceding claims, wherein the automatic retransmission is a hybrid automatic repeat request retransmission.

7. The method according to any of the preceding claims, wherein the radio base station is an eNodeB serving the cell in an Evolved Universal Terrestrial Radio Access Network.

8. A radio base station (600) configured to serve a cell of a wireless communication network, to allocate frequency resources for at least two wireless devices in the cell, and to apply semi-persistent scheduling, SPS, transmissions and automatic retransmissions for the at least two wireless devices, and wherein a time difference between an SPS transmission and a first automatic retransmission related to the SPS transmission is determined by a round trip time value, the radio base station comprising a processing unit (601) configured to:
- determine at least two different sets of frequency resources for the SPS transmissions of the at least two wireless devices, and
- allocate frequency resources for the SPS transmissions of the at least two wireless devices within an SPS period, such that the allocated frequency resources change between two of the at least two different sets every round trip time value.

9. The radio base station according to claim 8, wherein each of the at least two different sets of frequency resources is determined by a starting point in the available frequency spectrum and a direction towards higher or lower frequencies.

10. The radio base station according to claim 9, wherein the at least two different sets of frequency resources are determined to have different starting points, and/or different directions.

11. The radio base station according to any of claims 9-10, wherein a first of the at least two different sets of frequency resources is determined to have the starting point at a lowest frequency of the available frequency spectrum and a second of the at least two sets of frequency resources is determined to have the starting point at a highest frequency of the available frequency spectrum.

12. The radio base station according to any of claims 8-11, wherein the processing unit (601) is configured to determine only two different sets of frequency resources and to allocate frequency resources such that the allocated frequency resources change an odd amount of times between the two different sets.

13. The radio base station according to any of claims 8-12, wherein the automatic retransmission is a hybrid automatic repeat request retransmission.

14. The radio base station according to any of claims 8-13, wherein the radio base station is an eNodeB configured to serve the cell in an Evolved Universal Terrestrial Radio Access Network.

## Patentansprüche

1. Verfahren zum Zuweisen von Frequenzressourcen für mindestens zwei drahtlose Geräte in einer Zelle eines drahtlosen Kommunikationsnetzwerks, wobei semipermanente Planungs-, SPS, Übertragungen und automatische Wiederübertragungen für die mindestens zwei drahtlosen Geräte angewendet werden, und wobei eine Zeitdifferenz zwischen einer SPS-Übertragung und einer ersten automatischen Wiederübertragung bezogen auf die SPS-Übertragung durch einen Umlaufzeitwert bestimmt wird, wobei das Verfahren in einer die Zelle bedienenden Funkbasisstation (600) durchgeführt wird und das Verfahren umfasst:
- Bestimmen (510) von mindestens zwei verschiedenen Sätzen von Frequenzressourcen für die SPS-Übertragungen der mindestens zwei drahtlosen Geräte und
- Zuweisen (520) von Frequenzressourcen für die SPS-Übertragungen der mindestens zwei drahtlosen Geräte innerhalb eines SPS-Zeitraums, so dass sich die zugewiesenen Frequenzressourcen zwischen zwei der mindestens zwei verschiedenen Sätze pro Umlaufzeitwert ändern.

2. Verfahren nach Anspruch 1, wobei jeder der mindestens zwei verschiedenen Sätze von Frequenzressourcen durch einen Startpunkt im verfügbaren Frequenzspektrum und eine Richtung zu höheren oder niedrigeren Frequenzen bestimmt wird.

3. Verfahren nach Anspruch 2, wobei die mindestens zwei verschiedenen Sätze von Frequenzressourcen bestimmt werden, verschiedene Startpunkte und/oder verschiedene Richtungen aufzuweisen.

4. Verfahren nach einem der Ansprüche 2-3, wobei ein erster der mindestens zwei verschiedenen Sätze von Frequenzressourcen bestimmt wird, den Startpunkt bei einer niedrigsten Frequenz des verfügbaren Frequenzspektrums aufzuweisen, und ein zweiter der mindestens zwei Sätze von Frequenzressourcen bestimmt wird, den Startpunkt bei einer höchsten Frequenz des verfügbaren Frequenzspektrums aufzuweisen.

5. Verfahren nach einem der vorstehenden Ansprüche, wobei nur zwei verschiedene Sätze von Frequenzressourcen bestimmt (510) werden und wobei die Frequenzressourcen so zugewiesen (520) werden, dass sich die Frequenz-ressourcen eine ungerade Anzahl von Malen zwischen den zwei verschiedenen Sätzen ändern.

6. Verfahren nach einem der vorstehenden Ansprüche, wobei die automatische Wiederübertragung eine hybride automatische Wiederholungsanfrage-Wiederübertragung ist.

7. Verfahren nach einem der vorstehenden Ansprüche, wobei die Funkbasisstation ein eNode B ist, der die Zelle in einem entwickelten universellen terrestrischen Funkzugriffsnetzwerk bedient.

8. Funkbasisstation (600), die konfiguriert ist, um eine Zelle eines drahtlosen Kommunikationsnetzwerks zu bedienen, um Frequenzressourcen für mindestens zwei drahtlose Geräte in der Zelle zuzuweisen, und semipermanente Planungs-, SPS, Übertragungen und automatische Wiederübertragungen für die mindestens zwei drahtlosen Geräte anzuwenden, und wobei eine Zeitdifferenz zwischen einer SPS-Übertragung und einer ersten automatischen Wiederübertragung bezogen auf die SPS-Übertragung durch einen Umlaufzeitwert bestimmt wird, wobei die Funkbasisstation eine Prozessoreinheit (601) umfasst, die konfiguriert ist, um:
- mindestens zwei verschiedene Sätze von Frequenzressourcen für die SPS-Übertragungen der mindestens zwei drahtlosen Geräte zu bestimmen und
- Frequenzressourcen für die SPS-Übertragungen der mindestens zwei drahtlosen Geräte innerhalb eines SPS-Zeitraums zuzuweisen, so dass sich die zugewiesenen Frequenzressourcen zwischen zwei der mindestens zwei verschiedenen Sätze pro Umlaufzeitwert ändern.

9. Funkbasisstation nach Anspruch 8, wobei jeder der mindestens zwei verschiedenen Sätze von Frequenzressourcen durch einen Startpunkt im verfügbaren Frequenzspektrum und eine Richtung zu höheren oder niedrigeren Frequenzen bestimmt ist.

10. Funkbasisstation nach Anspruch 9, wobei die mindestens zwei verschiedenen Sätze von Frequenzressourcen bestimmt sind, verschiedene Startpunkte und/oder verschiedene Richtungen aufzuweisen.

11. Funkbasisstation nach einem der Ansprüche 9-10, wobei ein erster der mindestens zwei verschiedenen Sätze von Frequenzressourcen bestimmt ist, den Startpunkt bei einer niedrigsten Frequenz des verfügbaren Frequenzspektrums aufzuweisen, und ein zweiter der mindestens zwei Sätze von Frequenzressourcen bestimmt ist, den Startpunkt bei einer höchsten Frequenz des verfügbaren Frequenzspektrums aufzuweisen.

12. Funkbasisstation nach einem der Ansprüche 8-11, wobei die Prozessoreinheit (601) konfiguriert ist, um nur zwei verschiedene Sätze von Frequenzressourcen zu bestimmen und Frequenzressourcen so zuzuweisen, dass sich die zugewiesenen Frequenzressourcen eine ungerade Anzahl von Malen zwischen den zwei verschiedenen Sätzen ändern.

13. Funkbasisstation nach einem der Ansprüche 8-12, wobei die automatische Wiederübertragung eine hybride automatische Wiederholungsanfrage-Wiederübertragung ist.

14. Funkbasisstation nach einem der Ansprüche 8-13, wobei die Funkbasisstation ein eNode B ist, der konfiguriert ist, um die Zelle in dem entwickelten universellen terrestrischen Funkzugriffsnetzwerk zu bedienen.

## Revendications

1. Procédé d'affectation de ressources de fréquence pour au moins deux dispositifs sans fil dans une cellule d'un réseau de communication sans fil, dans lequel des transmissions de programmation semi-permanente, SPS, et des retransmissions automatiques sont appliquées pour les au moins deux dispositifs sans fil, et dans lequel une différence de temps entre une transmission SPS et une première retransmission automatique liée à la transmission SPS est déterminée par une valeur de temps aller-retour, le procédé étant réalisé dans une station de base radio (600) desservant la cellule, et le procédé comprenant :
- la détermination (510) d'au moins deux jeux différents de ressources de fréquence pour les transmissions SPS des au moins deux dispositifs sans fil, et
- l'affectation (520) de ressources de fréquence pour les transmissions SPS des au moins deux dispositifs sans fil à l'intérieur d'une période SPS, de telle sorte que les ressources de fréquence affectées changent entre deux des au moins deux jeux différents à chaque valeur de temps aller-retour.

2. Procédé selon la revendication 1, dans lequel chacun des au moins deux jeux différents de ressources de fréquence est déterminé par un point de départ dans le spectre de fréquences disponible et une direction vers des fréquences plus élevées ou plus basses.

3. Procédé selon la revendication 2, dans lequel les au moins deux jeux différents de ressources de fréquence sont déterminés comme ayant des points de départ différents, et/ou des directions différentes.

4. Procédé selon l'une quelconque des revendications 2 et 3, dans lequel un premier des au moins deux jeux différents de ressources de fréquence est déterminé comme ayant le point de départ à une fréquence la plus basse du spectre de fréquences disponible et un deuxième des au moins deux jeux de ressources de fréquence est déterminé comme ayant le point de départ à une fréquence la plus élevée du spectre de fréquences disponible.

5. Procédé selon l'une quelconque des revendications précédentes, dans lequel seulement deux jeux différents de ressources de fréquence sont déterminés (510) et dans lequel les ressources de fréquence sont affectées (520) de telle sorte que les ressources de fréquence changent un nombre de fois impair entre les deux jeux différents.

6. Procédé selon l'une quelconque des revendications précédentes, dans lequel la retransmission automatique est une retransmission de demande de répétition automatique hybride.

7. Procédé selon l'une quelconque des revendications précédentes, dans lequel la station de base radio est un nœud B évolué desservant la cellule dans un réseau d'accès radio terrestre universel évolué.

8. Station de base radio (600) configurée pour desservir une cellule d'un réseau de communication sans fil, pour affecter des ressources de fréquence pour au moins deux dispositifs sans fil dans la cellule, et pour appliquer des transmissions de programmation semi-permanente, SPS, et des retransmissions automatiques pour les au moins deux dispositifs sans fil, et dans laquelle une différence de temps entre une transmission SPS et une première retransmission automatique liée à la transmission SPS est déterminée par une valeur de temps aller-retour, la station de base radio comprenant une unité de traitement (601) configurée pour :
- déterminer au moins deux jeux différents de ressources de fréquence pour les transmissions SPS des au moins deux dispositifs sans fil, et
- affecter des ressources de fréquence pour les transmissions SPS des au moins deux dispositifs sans fil à l'intérieur d'une période SPS, de telle sorte que les ressources de fréquence affectées changent entre deux des au moins deux jeux différents à chaque valeur de temps aller-retour.

9. Station de base radio selon la revendication 8, dans laquelle chacun des au moins deux jeux différents de ressources de fréquence est déterminé par un point de départ dans le spectre de fréquences disponible et une direction vers des fréquences plus élevées ou plus basses.

10. Station de base radio selon la revendication 9, dans laquelle les au moins deux jeux différents de ressources de fréquence sont déterminés comme ayant des points de départ différents, et/ou des directions différentes.

11. Station de base radio selon l'une quelconque des revendications 9 et 10, dans laquelle un premier des au moins deux jeux différents de ressources de fréquence est déterminé comme ayant le point de départ à une fréquence la plus basse du spectre de fréquences disponible et un deuxième des au moins deux jeux de ressources de fréquence est déterminé comme ayant le point de départ à une fréquence la plus élevée du spectre de fréquences disponible.

12. Station de base radio selon l'une quelconque des revendications 8 à 11, dans laquelle l'unité de traitement (601) est configurée pour déterminer seulement deux jeux différents de ressources de fréquence sont déterminés et pour affecter des ressources de fréquence de telle sorte que les ressources de fréquence affectées changent un nombre de fois impair entre les deux jeux différents.

13. Station de base radio selon l'une quelconque des revendications 8 à 12, dans laquelle la retransmission automatique est une retransmission de demande de répétition automatique hybride.

14. Station de base radio selon l'une quelconque des revendications 8 à 13, dans laquelle la station de base radio est un nœud B évolué desservant la cellule dans un réseau d'accès radio terrestre universel évolué.
